# EUROPÄISCHE PATENTANMELDUNG

(11) **EP 4 848 069 A1**
(43) Veröffentlichungstag der Anmeldung: **02.12.2026**
(21) Anmeldenummer: 25179202.4
(22) Anmeldetag: 27.05.2025
(51) Int. Cl.: G06F 8/30, G06N 20/00

(54) **AUTOMATISIERTE SOFTWAREENTWICKLUNG**

(71) Anmelder: Appadise UG, 22299 Hamburg (DE)
(72) Erfinder: Schmitt, Marc, 22299 Hamburg (DE)
(74) Vertreter: Eisenführ Speiser

(57) **Zusammenfassung**

Verfahren zur automatisierten Softwareentwicklung auf Basis einer Anforderungsinformation, umfassend die Schritte: Konfigurieren einer Benutzerschnittstelle einer Entwicklungsumgebung zum Entwickeln einer Software, Eingabe der Anforderungsinformation, wobei die Anforderungsinformation funktionale sowie nicht-funktionale Anforderungen umfasst, Interpretieren der Anforderungsinformation, so dass die in einzelne Anforderungen zerlegt und abgelegt wird, Abrufen der abgelegten Anforderungsinformation und Bestimmen einer Kontextinformation, Konfigurieren eines Technologie-Stacks basierend auf der Kontextinformation, Erstellen, auf Basis der Kontextinformation und des Technologie-Stacks, einer Software Requirements Specification, Erstellen, auf Basis der Software Requirements Specification, einer Vorlage aus Daten aus einer Wissensdatenbank, wobei die Vorlage ein in Teilen vorgenerierter Quellcode ist; Überführen der Anforderungsinformation, des Technologie-Stacks und der Software Requirements Specification (SRS) auf Basis der Vorlage in eine formale Softwarearchitektur, Generieren eines Quellcodes basierend auf der formalen Softwarearchitektur und der Vorlage, Durchführen von automatisierten Testläufen des Quellcodes, Durchführen einer Kl-gestützten Fehlerbehebung des Quellcodes, Deployment-Orchestrierung der entwickelten Software, sodass die Software maßgeschneidert an die Anforderungsinformation adaptiert ist.

## Beschreibung

Die vorliegende Erfindung bezieht sich auf ein Verfahren und ein System zur automatisierten Softwareentwicklung. Insbesondere bezieht sich die vorliegende Erfindung auf die Nutzung einer Natural-Language-Processing-Engine zur Interpretation von Anforderungsinformationen, die Konfiguration von Technologie-Stacks und die Generierung von Quellcode basierend auf formalen Softwarearchitekturen. Dabei wird die Software maßgeschneidert, um bestehende technische Systeme zu optimieren und somit eine Lösung bereitzustellen, die speziell an die Umgebungseigenschaften oder Anforderungen eines Systems, zum Beispiel ein Lagersystem, angepasst ist.

Auf dem Gebiet der Softwareentwicklung ist es üblich, dass Entwickler manuell Anforderungen erfassen, analysieren und in technische Spezifikationen umwandeln, bevor sie mit der eigentlichen Programmierung beginnen. Dieser Prozess ist oft zeitaufwendig und fehleranfällig, da die Interpretation von Anforderungen eine hohe Fachkenntnis erfordert und Missverständnisse zwischen den Beteiligten entstehen können. Bekannte Systeme zur Softwareentwicklung umfassen typischerweise integrierte Entwicklungsumgebungen (IDEs), die den Entwicklern Werkzeuge zur Verfügung stellen, um Code zu schreiben, zu testen und zu debuggen. Diese Systeme bieten jedoch meist keine automatisierte Unterstützung bei der Umwandlung von Anforderungen in technische Spezifikationen oder bei der Auswahl geeigneter Technologien für die Implementierung. Gemäß bekannter Ansätze müssen Entwickler selbst entscheiden, welche Programmiersprachen, Frameworks und Datenbanken für ein Projekt geeignet sind, basierend auf ihrer Erfahrung und den spezifischen Anforderungen des Projekts.

Trotz der beträchtlichen Fortschritte auf dem Gebiet der Softwareentwicklung besteht nach wie vor ein Bedarf an Systemen, die den Entwicklungsprozess effizienter gestalten und die Qualität der entwickelten Software verbessern können. Insbesondere gibt es einen Bedarf an Lösungen, die den gesamten Entwicklungsprozess von der Anforderungsaufnahme bis zur Bereitstellung der Software automatisieren und dabei die Anpassung an spezifische Anforderungen ermöglichen. Solche Systeme könnten die Zeit und den Aufwand, die für die Entwicklung maßgeschneiderter Softwarelösungen erforderlich sind, erheblich reduzieren und gleichzeitig die Fehleranfälligkeit verringern. Insbesondere kann die Integration von neuen Elementen in bestehende technische Systeme optimiert werden, um zu verhindern, dass es durch die Integration zu Ausfällen oder Fehlern kommt. Darüber hinaus besteht ein Bedarf an Systemen, die in der Lage sind, Änderungen an Anforderungen oder technischen Spezifikationen flexibel zu verarbeiten, ohne dass eine vollständige Neuerstellung der Software erforderlich ist. Dies ist besonders wichtig in dynamischen Umgebungen, in denen sich Anforderungen schnell ändern können und eine schnelle Anpassung der Software notwendig ist, um insbesondere mit den Entwicklungen der Systeme, die mit der Software gesteuert werden, Schritt zu halten.

Es ist daher ein der vorliegenden Erfindung zugrundeliegendes technisches Problem, ein Verfahren und ein System zur Verfügung zu stellen, das die Nachteile bekannter Verfahren und Systeme überwindet.

Gemäß einem ersten Aspekt wird die Aufgabe gelöst durch ein Verfahren nach Anspruch 1 der vorliegenden Erfindung.

Das Verfahren zur automatisierten und maßgeschneiderten Softwareentwicklung auf Basis einer Anforderungsinformation umfasst in einem ersten Schritt ein Konfigurieren einer Benutzerschnittstelle einer Entwicklungsumgebung zum Entwickeln einer Software, wobei die Benutzerschnittstelle eine Eingabe und Verarbeitung einer Anforderungsinformation ermöglicht. In einem zweiten Schritt umfasst das Verfahren eine Eingabe der Anforderungsinformation an die zu entwickelnde Software in natürlicher Sprache durch eine Bedienperson an die Benutzerschnittstelle, wobei die Anforderungsinformation funktionale sowie nicht-funktionale Anforderungen an die zu entwickelnde Software umfasst. In einem weiteren Schritt umfasst das Verfahren ein Interpretieren der Anforderungsinformation durch eine Natural-Language-Processing-Engine (NLPE), so dass die Anforderungsinformation in computerlesbare Daten umgewandelt und in einzelne Anforderungen zerlegt und abgelegt wird.

In einem weiteren Schritt umfasst das Verfahren ein Abrufen der abgelegten interpretierten Anforderungsinformation und das Bestimmen, auf Basis der interpretierten Anforderungsinformation, einer Kontextinformation, die eine mit der zu entwickelnden Software verbundene Entwicklungsaufgabe beschreibt.

In einem weiteren Schritt umfasst das Verfahren ein Konfigurieren eines Technologie-Stacks basierend auf der Kontextinformation, wobei der Technologie-Stack umfasst: eine Programmiersprache, ein Framework und eine Datenbank.

In einem weiteren Schritt umfasst das Verfahren ein Erstellen, auf Basis der Kontextinformation und des Technologie-Stacks, einer Software Requirements Specification (SRS), wobei die Software Requirements Specification (SRS) umfasst: Frontend-Komponenten, Backend-Komponenten, Datenbankschemata, Application Programming Interfaces (APIs) und Konfigurationsdateien.

In einem weiteren Schritt umfasst das Verfahren ein Erstellen, auf Basis der Software Requirements Specification (SRS), einer Vorlage aus Daten aus einer Wissensdatenbank, wobei die Wissensdatenbank die Daten umfasst: Code-Snippets, Designmuster, Projektstrukturen und Sicherheitsprüfungen und wobei die Vorlage ein in Teilen vorgenerierter Quellcode ist.

In einem weiteren Schritt umfasst das Verfahren ein Überführen der Anforderungsinformation, des Technologie-Stacks und der Software Requirements Specification (SRS) auf Basis der Vorlage in eine formale Softwarearchitektur, wobei die Softwarearchitektur umfasst: Architekturstil, Schichtenmodell, Kommunikationsprotokolle, Sicherheitsmechanismen, Deployment- und Orchestrierungsstrategie. In einem weiteren Schritt umfasst das Verfahren ein Generieren eines Quellcodes für die zu entwickelnde Software basierend auf der formalen Softwarearchitektur und der Vorlage.

In einem weiteren Schritt umfasst das Verfahren ein Durchführen von automatisierten Testläufen des Quellcodes und ein Durchführen einer KI-gestützten Fehlerbehebung des Quellcodes, sodass der Quellcode von Fehlern bereinigt wird und fehlerfrei abläuft.

In einem letzten Schritt umfasst das Verfahren eine Deployment-Orchestrierung der entwickelten Software, sodass die Software maßgeschneidert an die Anforderungsinformation adaptiert ist und insbesondere in einem System bereitgestellt werden kann, um dieses optimiert zu steuern.

Insbesondere ist das Verfahren dazu ausgebildet, in einem automatisierten Industriebetrieb eingesetzt zu werden, wobei es der Erfassung, Interpretation und strukturierten Aufbereitung von Anforderungsinformationen dient, die für die Softwareentwicklung zum Entwickeln einer Software für den Betrieb eines automatisierten Industriebetriebs erforderlich sind.

Die Anforderungsinformation beschreibt eine Aufgabenstellung im Kontext eines automatisierten technischen Betriebssystems, insbesondere in industriellen oder logistiknahen Anwendungen. Dazu gehören beispielsweise automatisierte Fertigungsstraßen, Transportanlagen, Verpackungsstationen oder Warenträgersysteme. Die Anforderungsinformation umfasst in diesem Kontext beispielsweise unter anderem Angaben zu den zu bewegenden oder zu verarbeitenden Objekten. Hiermit sind beispielsweise Warengruppen, Bauteilklassen und/oder Transportgüter bezeichnet. Zudem umfasst die Anforderungsinformation insbesondere Angaben zu den zugehörigen Bewegungsarten und den einzusetzenden Transport- und Handhabungsmitteln. Hierzu zählen beispielsweise Roboterarme, Förderbänder und/oder fahrerlose Transportsysteme. Schließlich sind beispielsweise auch technische und organisatorische Rahmenbedingungen, wie die verfügbaren Flächen, Energieversorgung, Sicherheitsvorgaben und/oder Taktzeiten von den Anforderungsinformationen umfasst.

Die Anforderungsinformation ist beispielsweise als lagerautomatisierungsspezifische Aufgabenstellung definiert. Dadurch ist sichergestellt, dass sämtliche Eingabedaten konkret auf das geplante Lager- bzw. Logistikproblem ausgerichtet sind, beispielsweise: Art und Anzahl der einzulagernden oder zu kommissionierenden Artikel, erforderliche Umschlagleistung, Durchsatz pro Zeiteinheit, verfügbare Lagerfläche und Einschränkungen in der Infrastruktur, sowie weitere relevante Parameter, beispielsweise die Anzahl von Stellplätzen und Dimensionen bestimmter Zonen. Die Anforderungsinformation bildet somit die zentrale Zielvorgabe für das System. Aus technischer Sicht werden alle relevanten Kennzahlen zu Durchsatz, Flächenbedarf und Produktcharakteristika, beispielsweise Gefahrgut, im Voraus eindeutig festgelegt. Dies erlaubt eine zielgerichtete, automatisierte Planung des Gesamtsystems, die maßgeschneidert auf das System abgestimmt ist. Damit kann bereits mit der Anforderungsinformation sichergestellt werden, dass die technischen Rahmenbedingungen berücksichtigt werden.

Das Verfahren umfasst ein automatisiertes Analysieren der Anforderungsinformation mittels eines Natural-Language-Processing-Moduls (NLPM), wobei die Anforderungsinformation durch eine Bedienperson in natürlicher Sprache eingegeben wird. Das NLPM ist ausgebildet, aus formellen und/oder informellen Beschreibungstexten funktionale Merkmale, typische Nutzungsszenarien sowie technische und organisatorische Randbedingungen zu extrahieren. Dabei werden die extrahierten Informationen in strukturierte, maschinenlesbare Anforderungseinheiten überführt. Die so erzeugten Anforderungseinheiten umfassen sowohl funktionale Anforderungen, die sich auf konkrete Softwarefunktionen und -verhalten beziehen, als auch nicht-funktionale Anforderungen, die beispielsweise Sicherheitsmerkmale, Leistungsvorgaben oder regulatorische Rahmenbedingungen betreffen.

Funktionale Anforderungen bezeichnen beispielsweise Merkmale der Software, die sich auf deren spezifisches Verhalten und die durchzuführenden Aufgaben beziehen, insbesondere im Hinblick auf Eingaben, Ausgaben, Datenverarbeitung, Schnittstellen oder Benutzerinteraktionen. Nicht-funktionale Anforderungen betreffen beispielsweise die qualitativen Eigenschaften der Software, wie beispielsweise Performance, Skalierbarkeit, Sicherheit, Wartbarkeit, Kompatibilität oder Zuverlässigkeit.

Typische funktionale Anforderungen betreffen unter anderem die Ansteuerung und Überwachung von Maschinen über webbasierte Benutzeroberflächen, die Erfassung von Artikel- und Lagerinformationen über Schnittstellen zu Unternehmensressourcenplanungssystemen (ERP) oder Datenbanken, beispielsweise über Programmierschnittstellen auf Basis von Representational State Transfer (REST), die automatische Planung und Optimierung von Abläufen, beispielsweise durch auf Sensordaten basierende Routenplanung für fahrerlose Transportsysteme, sowie die Bereitstellung interaktiver Benutzerschnittstellen, beispielsweise in Form von Dashboards oder Eingabeformularen.

Die Software kann dabei verschiedene Programmierschnittstellen nutzen, beispielsweise Representational State Transfer (REST), Graph Query Language (GraphQL) oder Simple Object Access Protocol (SOAP) für die Kommunikation mit webbasierten und unternehmensweiten Systemen, sowie Open Platform Communications Unified Architecture (OPC UA) oder Message Queuing Telemetry Transport (MQTT) für industrielle Echtzeitkommunikation und Anwendungen im Bereich des Internets der Dinge (IoT).

Die Art der Datenverarbeitung umfasst beispielsweise die Verarbeitung von Sensordaten in Echtzeit, die periodische Verarbeitung großer Datenmengen in Form von Stapelverarbeitung (Batch-Verarbeitung), beispielsweise für Prognosen unter Einsatz von Verfahren des maschinellen Lernens (ML), sowie die verteilte Verarbeitung in containerisierten Softwarearchitekturen mit verteilten Diensten (Microservices).

Nicht-funktionale Anforderungen betreffen insbesondere die Leistung (Performance), beispielsweise hinsichtlich der Einhaltung von Zykluszeiten in Produktionsanlagen, die horizontale Skalierbarkeit zur Bewältigung steigender Datenmengen, die Sicherheit durch Zugriffskontrolle und verschlüsselte Datenübertragung mittels Transport Layer Security (TLS) oder Secure Sockets Layer (SSL), die Wartbarkeit durch modulare Softwarestrukturen und automatisierte Bereitstellungsprozesse (Continuous Integration/Continuous Deployment, CI/CD), die Kompatibilität mit standardisierten Systemen wie Unternehmensressourcenplanungssystemen (ERP), Produktionsleitsystemen (MES) oder Lagerverwaltungssystemen (WMS), sowie eine hohe Zuverlässigkeit durch Mechanismen zur Fehlererkennung und Wiederherstellung (Failover). Die Erfindung berücksichtigt solche Anforderungen automatisch, indem mittels Verarbeitung natürlicher Sprache (Natural Language Processing, NLP) relevante Programmierschnittstellen und Kommunikationstechnologien erkannt werden und daraufhin geeignete Softwarearchitekturen, Entwicklungsframeworks und Datenbanksysteme automatisch ausgewählt und in den generierten Quellcode integriert werden.

Weiterhin umfasst das Verfahren ein Erfassen benutzerspezifischer Technologie-Stacks, die beispielsweise über die Benutzerschnittstelle eingegeben werden. Die Technologie-Stacks betreffen insbesondere die Angabe mindestens einer bevorzugten Programmiersprache, wie beispielsweise Java, Python, JavaScript oder C#, mindestens eines bevorzugten Software-Frameworks, wie beispielsweise Spring Boot, Django, React oder Angular, sowie mindestens eines gewünschten Datenbanksystems, wie beispielsweise SQL-basierte relationale Datenbanken, NoSQL-Datenbanken oder Graphdatenbanken. Die erfassten Präferenzen werden bei der automatisierten Generierung von Quellcode und bei architekturrelevanten Empfehlungen berücksichtigt, sodass eine auf die benutzerspezifischen Vorgaben abgestimmte Softwarelösung erzeugt wird.

Die Anforderungsinformation umfasst insbesondere objektbezogene Parameter zu transportierenden oder zu handhabenden Objekten und/oder Einheiten. Diese Parameter beinhalten unter anderem geometrische Merkmale, physikalische Eigenschaften und/oder regulatorische Klassifikationen. Weiterhin generiert die Natural-Language-Processing-Engine (NLPE) bei unvollständigen oder interpretationsbedürftigen Eingaben automatisierte Rückfragen an die Bedienperson, um Detailinformationen und Anforderungen zu objektspezifischen Risiken, Transport- und Handhabungsbedingungen zu erfassen.

In einer bevorzugten Ausführungsform umfasst die Anforderungsinformation eine oder mehrere Angaben zu zu bewegenden Lastträgertypen und/oder zu transportierenden Gefahrgütern und/oder zu einzusetzenden Sensor- und Maschinentechnologien.

Weiterhin generiert die Natural-Language-Processing-Engine (NLPE) Rückfragen an die Bedienperson, um normgerechte Detailangaben zu Gefahrgutklassen, Transportbedingungen und Kompatibilitätsvorgaben für Lastträgertypen zu ermitteln. Dabei erlaubt das System die Software auf die tatsächliche Logistikanwendung, z.B. ein bestimmtes Hochlager, abzustimmen.

Das erfindungsgemäße Verfahren berücksichtigt in der Anforderungsinformation insbesondere unterschiedliche Lastträgertypen, bzw. Ladungsträger, etwa Holzpaletten, Europaletten oder Kunststoffpaletten. Die jeweiligen Abmessungen, Materialien und Gewichte werden bei der Planung einbezogen, um Regale, Förderanlagen und Greifsysteme korrekt auszulegen, Tragfähigkeit und Kompatibilität in einer Simulation zu prüfen, und relevante Sicherheits- und Hygieneanforderungen, beispielsweise bei Kunststoffpaletten in der Lebensmittelindustrie, zu berücksichtigen. Die Flexibilität, mehrere Ladungsträgertypen zu handhaben, erhöht die Praxistauglichkeit des Systems erheblich.

Wenn gewisse Artikel als Gefahrgut eingestuft sind, beispielsweise brennbare oder toxische Chemikalien, kann dies in der Anforderungsinformation ebenfalls definiert werden. Das System plant daraufhin spezielle Lagerzonen, beispielsweise mit Auffangwannen oder Feuerschutz, geeignete Sicherheitsabstände, zusätzliche Brand- und Leckagedetektion und angepasste Transportgeschwindigkeiten oder Roboterrouten, falls erforderlich. So wird sichergestellt, dass sämtliche Sicherheitsvorschriften und regulatorischen Vorgaben bereits in der automatischen Planung und Simulation berücksichtigt sind.

Sofern in der Anforderungsinformation spezifiziert ist, dass bestimmte Artikel als Gefahrgut einzustufen sind, beispielsweise als brennbare oder toxische Chemikalien, wird dies durch das System erkannt und automatisch in die Planung der Lagerung, des Transports und der Handhabung einbezogen. Die Verarbeitung natürlicher Sprache ermöglicht es dem System, bereits auf Basis allgemeiner Angaben, wie "brennbare Chemikalie" oder "toxischer Stoff", erste sicherheitsrelevante Maßnahmen zu identifizieren. Liegen die Angaben nur unvollständig vor, generiert das System automatisiert Rückfragen an den Benutzer, um zusätzliche Detailinformationen abzufragen, insbesondere die zutreffende Gefahrgutklasse, maximal zulässige Lagermengen, spezifische Schutzmaßnahmen (z. B. Feuerschutz, Leckagedetektion, Belüftung) sowie Anforderungen an Transportmittel und Handhabung. Die erhaltenen Informationen werden anschließend automatisch in die Planung geeigneter Lagerzonen, Transportwege und Sicherheitsvorkehrungen integriert, sodass regulatorische Vorgaben und betriebliche Sicherheitsanforderungen eingehalten werden.

In einer weiteren bevorzugten Ausführungsform wird insbesondere auf Basis der interpretierten Anforderungsinformation und der erzeugten Software Requirements Specification (SRS) ein virtueller Testlauf der zu entwickelnden Software in einer simulierten Lagerumgebung durchgeführt. Vorzugsweise wird nach Abschluss eines erfolgreichen virtuellen Testlaufs ein Testlauf an einem realen Gerät, insbesondere einem Gabelstapler, automatisiert vorbereitet und ausgeführt. Vorzugsweise wird zuerst ein digitaler Zwilling des Systems erstellt. Dies kann auf Basis bekannter Methoden geschehen. Die erzeugte Software wird anschließend getestet, indem der digitale Zwilling gesteuert wird. Dies erlaubt es sicherzustellen, dass die Software fehlerfrei in das tatsächliche System integriert werden kann. Weiterhin können Fehlerzustände, die das tatsächliche System stören oder beschädigen würden, erkannt werden, bevor die Software implementiert wird.

Dieser virtuelle Testlauf ermöglicht somit eine umfassende Überprüfung der Software in einer kontrollierten Umgebung, die reale Bedingungen nachahmt, ohne die Risiken und Kosten eines physischen Tests. Durch die Simulation können potenzielle Fehler und Schwachstellen frühzeitig identifiziert und behoben werden, bevor die Software auf einem realen Gerät eingesetzt wird. Die automatisierte Vorbereitung und Ausführung des Testlaufs auf einem realen Gerät stellt sicher, dass die Software nicht nur in einer simulierten Umgebung, sondern auch unter realen Betriebsbedingungen einwandfrei funktioniert. Dies bietet eine zusätzliche Sicherheitsebene und gewährleistet, dass die Software den Anforderungen und Spezifikationen entspricht, die in der Anforderungsinformation festgelegt wurden. Die Kommunikationsmechanismen oder Mittel zur Interaktion zwischen den Komponenten umfassen die Nutzung von Schnittstellen und Protokollen, die eine nahtlose Integration und Datenübertragung zwischen der simulierten Umgebung und dem realen Gerät ermöglichen. Darüber hinaus ermöglicht die automatisierte Vorbereitung und Ausführung der Tests eine höhere Effizienz und Genauigkeit, da menschliche Fehler minimiert und die Testprozesse beschleunigt werden.

Erfindungsgemäß wird nach einem erfolgreichen virtuellen Testlauf (Simulation) ein automatisierter Test an realer Hardware initiiert, ohne dass dazu ein separater manueller Programmieraufwand erforderlich ist. Im Einzelnen bedeutet das: Die in der Simulation verifizierten Steuerungsdaten, beispielsweise Wegpunkte, Greiferbewegungen und Förderbandgeschwindigkeiten, werden direkt an die reale Steuerung übertragen. Ein automatischer Probelauf startet auf den entsprechenden Geräten, beispielsweise Roboter, FTS sowie einer Förderanlage, in einer Testumgebung oder im laufenden Betrieb. Sensorische Rückmeldungen aus der Realität werden erfasst und ausgewertet, um Abweichungen gegenüber dem Simulationsmodell zu erkennen. Damit entsteht ein durchgängiger Übergang vom virtuellen Modell hin zum realen System, was Zeit und Aufwand reduziert und zugleich die Zuverlässigkeit erhöht.

Nach erfolgreicher Simulation wird der getestete Steuerungscode beispielsweise einschließlich der verifizierten Steuerungsparameter, wie etwa Wegpunkte, Bewegungsabläufe von Greifern sowie Geschwindigkeitsprofile von Förder- oder Transportsystemen, automatisch für den Einsatz in der realen Hardwareumgebung aufbereitet. Die Übertragung erfolgt beispielsweise über standardisierte Schnittstellen, wobei bestehende Kommunikationsprotokolle und sicherheitsrelevante Parameter berücksichtigt und für die Zielhardware angepasst werden. Der Deployment-Prozess erfolgt beispielsweise automatisiert oder halbautomatisiert über ein integriertes Deployment-Tool, wobei die Steuerungssoftware in bestehende Steuerungs- oder Leitsysteme eingebunden wird. Anschließend erfolgt ein Probelauf an der realen Hardware. Sensorische Rückmeldungen werden erfasst und mit den Simulationsdaten abgeglichen.

Abweichungen werden durch ein KI-gestütztes System analysiert, um gegebenenfalls eine automatische Optimierung des Steuerungscodes zu ermöglichen. Die Software ist beispielsweise modular aufgebaut und berücksichtigt bereits bei der Generierung systembezogene Informationen zur vorhandenen Hardware- und Softwarearchitektur, wodurch eine nahtlose Integration in bestehende Infrastrukturen unterstützt wird.

In einer weiteren Ausführungsform umfasst das Verfahren insbesondere den Schritt des iterativen Funktionszerlegens der Kontextinformation und/oder des Technologie-Stacks und/oder der Software Requirements Specification (SRS) in Untermodule. Insbesondere sind die Untermodule nachträglich modifizierbar, sodass Änderungen an einzelnen Untermoduleigenschaften vorgenommen werden können, ohne dass eine vollständige Neuerstellung der Anforderungsinformation erforderlich ist. Dieses Vorgehen führt nicht nur zu einer iterativen Verbesserung, sondern reduziert den Rechenaufwand erheblich, da die Anforderungsinformationen nicht vollständig neu erstellt werden.

Die iterative Funktionszerlegung der Kontextinformation, des Technologie-Stacks und der SRS in Untermodule fördert eine modulare Architektur, die eine effiziente Verwaltung und Wartung der Software ermöglicht. Durch die nachträgliche Modifizierbarkeit der Untermodule wird die Anpassungsfähigkeit der Software erhöht, da Änderungen schnell und gezielt vorgenommen werden können, ohne den gesamten Entwicklungsprozess zu beeinträchtigen. Dies führt zu einer Reduzierung der Entwicklungszeit und -kosten, da die Notwendigkeit einer vollständigen Neuerstellung der Anforderungsinformation entfällt.

Darüber hinaus ermöglicht die modulare Struktur eine bessere Skalierbarkeit der Software, da neue Funktionen und Komponenten leicht hinzugefügt werden können, indem einfach neue Untermodule erstellt und integriert werden. Dies ist besonders vorteilhaft in dynamischen und sich schnell ändernden Umgebungen, in denen die Software kontinuierlich weiterentwickelt und angepasst werden muss. Dabei wird auch der Rechenaufwand optimiert, da nur die Prozesse neu ausgeführt werden, die von Änderungen betroffen sind.

Das Gesamtsystem ist modular aufgebaut. Änderungen an einzelnen Untermoduleigenschaften erfordern keine komplette Neuanforderung oder Neuplanung und somit keine Neuerstellung der erzeugten Software. Stattdessen werden lediglich die betroffenen Parameter aktualisiert, beispielsweise etwa: Anderer Robotertyp mit geänderter Traglast und/oder Geschwindigkeit; Variation einer Fördergeschwindigkeit oder Veränderung des Greifers; Anpassungen an Regalstruktur oder Schienensystemen. Das Verfahren berechnet anschließend auf Basis der bestehenden Anforderungsinformation eine neue Konfiguration und Simulation. Dieser modulare Ansatz reduziert den Entwicklungs- und Anpassungsaufwand erheblich.

In einer weiteren Ausführungsform umfasst das Verfahren weiterhin die Schritte des Empfangens einer Änderung an mindestens einer Eigenschaft eines Untermoduls, des Speicherns der geänderten Untermoduleigenschaften und des Bereitstellens des geänderten Untermoduls für eine weitere Nutzung.

Die Fähigkeit, Änderungen an Untermodulen zu empfangen, ermöglicht eine dynamische Anpassung der Softwareentwicklung, indem die Entwicklungsumgebung kontinuierlich auf neue Anforderungen oder Modifikationen reagiert. Dies ist besonders vorteilhaft in agilen Entwicklungsprozessen, bei denen sich Anforderungen häufig ändern können. Das Speichern der geänderten Untermoduleigenschaften stellt sicher, dass alle Anpassungen dokumentiert und für zukünftige Referenzen oder Analysen verfügbar sind.

In einer weiteren Ausführungsform umfasst das Verfahren die Schritte des Definierens von Tests, des Auswertens von erstellten Fehlerprotokollen, und des Korrigierens des Quellcodes, bis alle definierten Tests erfolgreich durchlaufen sind.

Das Definieren von Tests ermöglicht es, spezifische Anforderungen und Funktionalitäten der Software zu überprüfen und sicherzustellen, dass sie korrekt implementiert sind. Dies geschieht durch die Erstellung von Testfällen, die verschiedene Aspekte der Software abdecken, einschließlich funktionaler und nichtfunktionaler Anforderungen. Das Auswerten von erstellten Fehlerprotokollen ist dabei ein weiterer wichtiger Schritt, da es ermöglicht, Fehler und Probleme im Quellcode zu identifizieren, die während der Testläufe auftreten. Fehlerprotokolle enthalten detaillierte Informationen über die Art und Ursache der Fehler, was es den Entwicklern erleichtert, gezielte Korrekturen vorzunehmen. Das Korrigieren des Quellcodes, bis alle definierten Tests erfolgreich durchlaufen sind, stellt sicher, dass die Software frei von Fehlern ist und die Anforderungen vollständig erfüllt. Dieser iterative Prozess der Fehlerbehebung und Testdurchführung verbessert die Qualität der Software.

In einer weiteren Ausführungsform erfolgt der Schritt des Interpretierens, insbesondere durch ein NLP-Modul und/oder ein Large Language Model (LLM), das auf Software-Dokumentationen, Designmustern und Code-Repositories trainiert wurde.

Durch das Training des LLM auf spezifischen Quellen, die für die Softwareentwicklung relevant sind, wird eine verbesserte Interpretation der Anforderungsinformation ermöglicht. Dies führt zu einer verbesserten Genauigkeit bei der Umwandlung und Zerlegung der Anforderungen, was wiederum die Qualität der generierten Software erhöht. Dies ist besonders nützlich, wenn die Anforderungsinformation sowohl funktionale als auch nicht-funktionale Anforderungen umfasst, da das LLM in der Lage ist, diese unterschiedlichen Arten von Anforderungen klar zu unterscheiden und entsprechend zu verarbeiten. Darüber hinaus kann das LLM, durch sein Training auf Designmustern und Code-Repositories, spezifische Entwicklungsaufgaben und Lösungen identifizieren, die für die zu entwickelnde Software relevant sind. Das Training des LLMs umfasst somit einen Trainingsschritt, in dem das LLM mit Software Designmustern und/oder Code-Repositories trainiert wurde. Das Training kann durchgeführt werden, bevor das System ausgeführt wird. Das Training des LLMS kann überwacht oder nicht-überwacht durchgeführt werden. Dies führt zu einer optimierten Auswahl des Technologie-Stacks und einer präziseren Erstellung der SRS, da das LLM auf eine umfangreiche Wissensbasis zugreifen kann, die bewährte Praktiken und Muster der Softwareentwicklung umfasst.

In einer weiteren bevorzugten Ausführungsform erfolgt das Generieren von Quellcode insbesondere unter Berücksichtigung sicherheitskritischer Best Practices und Compliance-Anforderungen, insbesondere unter Einhaltung von PCI-DSS-, und/oder HIPAA- und/oder GDPR-Richtlinien.

Diese Vorgehensweise stellt sicher, dass die entwickelte Software nicht nur funktional und effizient ist, sondern auch den Sicherheits- und Datenschutzstandards entspricht, die in verschiedenen Branchen erforderlich sind. Insbesondere werden Richtlinien wie PCI-DSS, HIPAA und GDPR berücksichtigt, die jeweils spezifischen Anforderungen an den Schutz von Finanzdaten, Gesundheitsinformationen und personenbezogenen Daten stellen.

In einer weiteren bevorzugten Ausführungsform umfasst das Verfahren weiterhin die Schritte der Erfassung von Benutzerfeedback, insbesondere in einer Staging-Umgebung und Verwendung einer KI-Interpretationsschicht, um das Benutzerfeedback in zusätzliche Anforderungen für eine iterative Codeverbesserung umzuwandeln.

Diese Umgebung ermöglicht es den Benutzern, die Software zu nutzen und Feedback zu geben, das dann gesammelt und analysiert wird. Die KI-Interpretationsschicht spielt eine zentrale Rolle bei der Verarbeitung des Benutzerfeedbacks. Sie interpretiert das Feedback und wandelt es in zusätzliche Anforderungen um, die zur Verbesserung des Codes verwendet werden. Diese Schicht nutzt insbesondere Methoden des maschinellen Lernens, um das Feedback zu interpretieren und in präzise und umsetzbare Anforderungen zu übersetzen. Diese Anforderungen werden dann in den Entwicklungsprozess integriert, was zu einer iterativen Verbesserung des Codes führt. Diese iterative Vorgehensweise ermöglicht eine kontinuierliche Anpassung und Optimierung der Software, basierend auf den tatsächlichen Erfahrungen und Bedürfnissen der Benutzer.

In einer weiteren Ausführungsform erfolgt der Schritt der Deployment-Orchestrierung insbesondere auf einer containerisierten Infrastruktur.

Die containerisierte Infrastruktur ermöglicht eine effiziente und flexible Bereitstellung der entwickelten Software, indem sie die Software in isolierten Umgebungen, sogenannten Containern, ausführt. Diese Container enthalten alle notwendigen Komponenten, einschließlich der Laufzeitumgebung, Bibliotheken und Abhängigkeiten, die für den Betrieb der Software erforderlich sind. Durch die Verwendung von Containern wird die Konsistenz zwischen Entwicklungs-, Test- und Produktionsumgebungen sichergestellt, da die Software in jeder Umgebung identisch ausgeführt wird. Dies reduziert die Wahrscheinlichkeit von Fehlern und Inkompatibilitäten, die durch unterschiedliche Umgebungen verursacht werden können. Ein Vorteil der containerisierten Infrastruktur ist die Skalierbarkeit, da Container leicht repliziert und auf mehreren Servern verteilt werden können, um den Anforderungen an die Lastverteilung und Hochverfügbarkeit gerecht zu werden. Darüber hinaus ermöglicht die containerisierte Infrastruktur eine schnelle und einfache Aktualisierung der Software, da neue Versionen der Software einfach durch den Austausch der Container bereitgestellt werden können, ohne dass die gesamte Infrastruktur neu konfiguriert werden muss. Dies führt zu einer Reduzierung der Ausfallzeiten und einer Verbesserung der Wartbarkeit der Software. Ein weiterer Vorteil ist die Sicherheit, da Container isolierte Umgebungen bieten, die den Zugriff auf die Ressourcen der Host-Maschine einschränken und somit das Risiko von Sicherheitsverletzungen reduzieren. Die containerisierte Infrastruktur unterstützt auch die Integration von Continuous Integration und Continuous Deployment (CI/CD) Pipelines, wodurch der gesamte Entwicklungs- und Bereitstellungsprozess automatisiert und beschleunigt wird.

In einer bevorzugten Ausführungsform erfolgt die Bereitstellung der entwickelten Software in einer containerisierten Infrastruktur, wobei als Containerisierungslösung insbesondere Docker verwendet wird. Die Software wird dabei beispielsweise in isolierten Containern ausgeführt, die sämtliche zur Ausführung erforderlichen Komponenten einschließlich Laufzeitumgebung, Bibliotheken und Konfigurationen enthalten. Dadurch wird eine konsistente und wiederholbare Ausführung über Entwicklungs-, Test- und Produktionsumgebungen hinweg sichergestellt. Die Container lassen sich automatisiert über Orchestrierungsplattformen wie Kubernetes verwalten, was insbesondere eine dynamische Skalierung, Lastverteilung sowie ein automatisiertes Wiederherstellen fehlerhafter Instanzen ermöglicht. Neue Softwareversionen können beispielsweise durch den Austausch einzelner Container mit minimaler Ausfallzeit bereitgestellt werden. Die Containerisierung unterstützt zudem eine modulare Softwarearchitektur, bei der Änderungen an einzelnen Funktionsmodulen separat entwickelt, getestet und bereitgestellt werden können. Die containerisierte Infrastruktur ist beispielsweise in eine CI/CD-Pipeline eingebunden, die einen automatisierten Build-, Test- und Deployment-Prozess ermöglicht. Die Container laufen beispielsweise in isolierten Umgebungen, wodurch das Risiko für sicherheitsrelevante Zwischenfälle reduziert und eine zentrale Verteilung sicherheitskritischer Updates unterstützt wird.

In einem zweiten Aspekt umfasst die Erfindung ein System zur automatisierten und maßgeschneiderten Softwareentwicklung auf Basis einer Anforderungsinformation.

Das System umfasst eine Benutzerschnittstelle, konfiguriert zur Entgegennahme der Anforderungsinformation an die zu entwickelnde Software in natürlicher Sprache durch eine Bedienperson. Das System umfasst zudem eine Erstellungseinheit, welche ein Interpretationsmodul umfasst, das ausgebildet ist, die Anforderungsinformation durch eine Natural-Language-Processing-Engine (NLPE) zu interpretieren und eine Kontextinformation aus der Anforderungsinformation zu bestimmen, die eine mit der zu entwickelnden Software verbundene Entwicklungsaufgabe beschreibt, einen Technologie-Stack basierend auf der Anforderungsinformation zu konfigurieren, wobei der Technologie-Stack umfasst: eine Programmiersprache, ein Framework und eine Datenbank, und das Interpretationsmodul ausgebildet ist, eine Software Requirements Specification (SRS) zu erstellen, wobei die Software Requirements Specification (SRS) Frontend-Komponenten, Backend-Komponenten, Datenbankschemata, Application Programming Interfaces (APIs) und Konfigurationsdateien umfasst.

Die Erstellungseinheit umfasst weiterhin ein Wissensdatenbankmodul, das ausgebildet ist, auf eine Wissensdatenbank zuzugreifen, wobei die Wissensdatenbank folgende Daten umfasst: Code-Snippets, Designmuster, Projektstrukturen und Sicherheitsprüfungen. Das Wissensdatenbankmodul ist mit dem Interpretationsmodul gekoppelt und konfiguriert, um auf Basis der von dem Interpretationsmodul bestimmten Kontextinformation und/oder dem Technologie-Stack und/oder der Software Requirements Specification (SRS), eine oder mehrere Vorlagen aus der Wissensdatenbank zu erstellen und bereitzustellen.

Die Erstellungseinheit umfasst weiterhin eine Softwarearchitekturerstellungseinheit, die ausgebildet ist, die Anforderungsinformation, den Technologie-Stack und die Software Requirements Specification (SRS) auf Basis der Vorlage in eine formale Softwarearchitektur zu überführen, wobei die Softwarearchitektur umfasst: Architekturstil, Schichtenmodell, Kommunikationsprotokolle, Sicherheitsmechanismen und Deployment- und Orchestrierungsstrategie.

Die Erstellungseinheit umfasst weiterhin ein Codegenerierungsmodul, das dazu ausgebildet ist, Quellcode für die zu entwickelnde Software basierend auf der Softwarearchitektur zu generieren,

Die Erstellungseinheit umfasst weiterhin ein Testmodul, das dazu ausgebildet ist, Testläufe des Quellcodes durchzuführen und KI-gestützte Fehlerbehebung des Quellcodes durchzuführen.

Die Erstellungseinheit umfasst weiterhin ein Deployment-Orchestrierungsmodul, das dazu ausgebildet ist, entwickelte Software auszurollen, sodass die Software maßgeschneidert an die Anforderungsinformation adaptiert ist.

Ein Vorteil dieses Systems liegt in der Fähigkeit, die Anforderungen an die Softwareentwicklung in natürlicher Sprache entgegenzunehmen und zu interpretieren, wodurch der Entwicklungsprozess erheblich vereinfacht wird. Ein weiterer Vorteil ist die automatische Erstellung einer umfassenden Software Requirements Specification (SRS), die alle wesentlichen Komponenten der Softwareentwicklung abdeckt. Die Nutzung einer Wissensdatenbank ermöglicht die Bereitstellung von Vorlagen, die auf bewährten Code-Snippets, Designmustern und Projektstrukturen basieren, was die Effizienz und Qualität der Softwareentwicklung steigert. Insbesondere, da die SRS Code vorgeben kann, der in dem vorliegenden Anwendungsfall in Abhängigkeit der Anforderungsinformationen zwingend verwendet werden muss. Dadurch kann ein getesteter, etablierter Code, dessen Funktionalität geprüft ist oder der regulatorische Vorgaben erfüllt, vorgegeben werden, der zwingend verwendet wird. Dadurch wird verhindert, dass der Code für Aspekte, die in der Wissensdatenbank hinterlegt sind, durch andere Module erstellt wird. Insbesondere wird verhindert, dass dieser Code-Teil bei Nutzung künstlicher Intelligenz bei der Ausführung des Systems unterschiedliche Formen annimmt, z.B. wenn das zu Grunde liegenden Modell zwischen zwei Systemausführungen weiter trainiert wurde. Das System kann somit für bestimmte Aspekte Vorgaben machen, die zwingend umgesetzt werden, und dadurch Variationen bei mehrmaliger Erstellung der Software verhindern. Die formale Überführung der Anforderungsinformation in eine Softwarearchitektur stellt sicher, dass alle relevanten Aspekte der Softwareentwicklung berücksichtigt werden, einschließlich Sicherheitsmechanismen und Deployment-Strategien.

Insbesondere ist das System dazu ausgebildet, in einem automatisierten Industriebetrieb eingesetzt zu werden. Auf Basis von erfassten und interpretierten Anforderungsinformationen, insbesondere solcher zu Lagerprozessen, Transportbedingungen, Handhabungsanforderungen und eingesetzten Betriebsmitteln, ist das System dazu ausgebildet, eine anwendungsspezifische Betriebssoftware automatisiert zu generieren. Diese Software wird insbesondere auf die funktionalen und technischen Gegebenheiten des jeweiligen automatisierten Betriebsumfelds und der Anforderungen von zu bearbeitbaren und/oder zu bewegenden Objekten abgestimmt.

Das System umfasst eine Benutzerschnittstelle, über welche eine Bedienperson eine auf ein automatisiertes technisches Betriebssystem bezogene Anforderungsinformation eingibt. Die Benutzerschnittstelle ist dafür ausgelegt, Angaben zu funktionalen und nicht-funktionalen Anforderungen entgegenzunehmen und zur maschinellen Verarbeitung aufzubereiten. Die Anforderungsinformation kann dabei unter anderem Parameter zu gewünschten Systemleistungen, zu transportierenden oder handzuhabenden Objekten sowie zu prozessrelevanten Randbedingungen umfassen.

Das System umfasst eine Benutzerschnittstelle, welche, zum Beispiel im Fall der Erzeugung einer Logistiksoftware, die lagerautomatisierungsspezifische Anforderungsinformation von einer Bedienperson entgegennimmt und für die maschinelle Verarbeitung aufbereitet. Hierbei können Aspekte wie gewünschter Durchsatz, Lastträgertypen, beispielsweise Holz- oder Kunststoffpaletten, zu bewegende Artikel, beispielweise Gefahrgut und weitere Parameter erfasst werden. Bei unvollständigen Angaben erzeugt das Eingabemodul automatisierte Rückfragen, um sicherzustellen, dass alle relevanten Daten für die nachfolgende Planung vorliegen.

Im Zentrum der Benutzerinteraktion steht eine grafische Benutzeroberfläche, die entweder webbasiert oder als Desktop-Anwendung implementiert ist. Über diese Oberfläche werden Anforderungen an die zu entwickelnde Software spezifiziert. Neben Freitexteingaben unterstützt die Oberfläche auch formularbasierte Konfigurationen, die eine präzise Auswahl von Zieltechnologien, wie Programmiersprachen (z. B. Java, Python, JavaScript), Frameworks (z. B. Spring Boot, Django, React), Datenbanktechnologien (z. B. PostgreSQL, MongoDB) und Architekturparadigmen (z. B. Microservices, Monolith, Domain-driven Design) ermöglichen. Eine optionale Bibliothek stellt dabei vorgefertigte Anwendungsentwürfe für wiederkehrende Anwendungsfälle bereit.

Die Eingaben werden in einer darauffolgenden semantischen Interpretationsschicht analysiert, in der ein sprachverarbeitendes KI-Modul zum Einsatz kommt. Diese Schicht nutzt große Sprachmodelle (LLMs), die auf softwaretechnische Inhalte trainiert wurden, um aus der Benutzereingabe funktionale sowie nichtfunktionale Anforderungen zu extrahieren. Dabei werden beispielsweise Komponenten wie Benutzerregistrierung, Bezahlmodule oder Benachrichtigungsdienste identifiziert und in strukturierter Form aufbereitet. Ebenso erkennt das System externe Schnittstellenanforderungen, wie etwa Integrationen mit Zahlungsdienstleistern oder Cloud-Plattformen.

Zur fundierten Ableitung technischer Umsetzungsdetails greift das KI-Modul auf eine umfassende Wissensdatenbank zu. Diese Datenbank enthält kuratierte Informationen zu bewährten Designmustern, Integrationsrichtlinien, Code-Snippets und Sicherheitsvorgaben. Die Inhalte decken unterschiedliche Technologien sowie branchenspezifische Anforderungen (z. B. Datenschutz im Gesundheitswesen) ab und werden kontinuierlich aktualisiert. Die Wissensdatenbank bildet damit eine zentrale Referenz für die nachfolgende Spezifikations- und Generierungslogik.

Basierend auf den erkannten Anforderungen erstellt ein Spezifikationsgenerator eine formalisierte Software-Spezifikation (SRS). Diese spezifiziert systematisch alle für die Implementierung relevanten Komponenten, darunter Benutzeroberflächenstrukturen, Backend-Services, Datenbankschemata, API-Endpunkte sowie projektspezifische Konfigurationsdateien. Die Spezifikation dient als Grundlage für die anschließende automatisierte Codegenerierung.

Ein nachgelagertes Generierungsmodul übersetzt die SRS in lauffähigen Quellcode. Dabei werden projektbezogene Integrationsmuster, wie etwa API-Anbindungen oder Framework-spezifische Konventionen, direkt aus der Wissensdatenbank eingebunden. Der generierte Code wird automatisch versioniert und in einem Repository gespeichert, um Entwicklungsstände über Iterationen hinweg nachvollziehbar zu halten.

Zur Qualitätssicherung wird für jede erzeugte Anwendungseinheit ein Testmodul aktiviert, das automatisierte Testszenarien erzeugt und ausführt. Abhängig vom eingesetzten Technologie-Stack werden entsprechende Testframeworks wie JUnit, PyTest oder Jest eingesetzt. Eine statische Analyse des Quellcodes dient zusätzlich der Überprüfung auf Sicherheitsmängel, Stilabweichungen oder potentielle Laufzeitfehler. Die Testergebnisse werden zentral erfasst und für eine KI-gestützte Fehlersuche bereitgestellt.

Ein integriertes Debugging-Modul analysiert automatisiert auftretende Fehlerzustände. Hierzu werden Protokolle, Ausgaben und Metriken des generierten Codes ausgewertet, um problematische Abschnitte zu identifizieren. In Abhängigkeit vom erkannten Fehler schlägt das Modul zielgerichtete Korrekturen vor oder führt diese unmittelbar aus. Dieser Zyklus aus Test, Analyse und Korrektur wird solange wiederholt, bis definierte Qualitätskriterien erfüllt sind.

Nach erfolgreicher Validierung erfolgt über einen Deployment-Orchestrator die Bereitstellung der Anwendung. Dieser berücksichtigt die vom Benutzer bevorzugte Zielumgebung - etwa Cloud-Plattformen wie AWS oder Azure, containerisierte Umgebungen mit Docker/Kubernetes oder lokale Installationen - und erzeugt entsprechend angepasste Deployment-Artefakte. Das System unterstützt darüber hinaus Continuous-Delivery-Pipelines zur automatisierten Auslieferung stabiler Softwareversionen.

Alle Artefakte, einschließlich Quellcode, Spezifikationen, Tests, Protokolle und Konfigurationen, werden in einem versionierten Artefakt-Repository abgelegt. Dieses ermöglicht eine strukturierte Weiterentwicklung, z. B. durch Branching oder Rollbacks, und dient zugleich der Nachvollziehbarkeit von Änderungen.

Die Interaktion mit dem System vollzieht sich typischerweise in mehreren Schritten: Zu Beginn spezifiziert ein Benutzer über die Benutzeroberfläche eine Zielanwendung - etwa eine Java-Webanwendung mit React-Frontend, PostgreSQL-Datenbank und Stripe-Zahlungsintegration. Die KI analysiert diese Anforderungen, erstellt einen initialen Architekturentwurf und schlägt technische Umsetzungen vor. In einem iterativen Prozess ergänzt der Benutzer etwaige Zusatzwünsche, woraufhin das System automatisch alle betroffenen Module aktualisiert. Daraus ergibt sich eine vollständige SRS, auf deren Basis alle weiteren Generierungsschritte ablaufen.

Während der Entwicklungsphase können durch Benutzerfeedback, Testresultate oder Systemprotokolle weitere Verfeinerungen initiiert werden. Das KI-Debugging erkennt fehlerhafte Konfigurationen (z. B. fehlende API-Schlüssel), nimmt automatisierte Anpassungen vor und wiederholt Tests. Eine Staging-Umgebung dient der abschließenden Nutzerprüfung, bevor das System die Software für den produktiven Einsatz freigibt.

Die Wartung und Weiterentwicklung erfolgt auf Basis desselben KI-gestützten Ansatzes. Neue Features oder Änderungen können jederzeit spezifiziert, analysiert und integriert werden. Die Wissensdatenbank aktualisiert sich dynamisch, um technologische Weiterentwicklungen oder neue Best Practices zu berücksichtigen.

Insbesondere ist das System ausgebildet, Anforderungsinformationen zu automatisierten technischen Betriebssystemen entgegenzunehmen, wobei die Anforderungsinformation Angaben zu objektspezifischen Eigenschaften, Klassifikationen sowie zu einzusetzenden technischen Komponenten umfasst. Das Interpretationsmodul ist ferner ausgebildet, automatisierte Rückfragen zu generieren, um Detailinformationen zu transportbezogenen und handhabungsrelevanten Anforderungen zu ermitteln.

In einer weiteren Ausführungsform ist das System insbesondere ausgebildet, Anforderungsinformationen zu einer Lagerautomatisierung entgegenzunehmen, wobei die Anforderungsinformation Angaben zu Lastträgertypen und/oder Gefahrgutarten und/oder einzusetzenden Sensor- und Maschinenkomponenten umfasst. Das Interpretationsmodul ist insbesondere ferner ausgebildet, Rückfragen an die Bedienperson zu generieren, um normbasierte Detailangaben zu transportierten Gefahrgütern und deren Handhabung zu ermitteln.

Dieses System ist in der Lage, spezifische Angaben zu Lastträgertypen, Gefahrgutarten sowie den einzusetzenden Sensor- und Maschinenkomponenten zu erfassen. Die Integration dieser Informationen ermöglicht eine präzise Anpassung der Softwareentwicklung an die besonderen Anforderungen von Lagerautomatisierungssystemen. Das Interpretationsmodul des Systems ist dabei in der Lage, Rückfragen an die Bedienperson zu generieren. Diese Rückfragen sind darauf ausgerichtet, normbasierte Detailangaben zu transportierten Gefahrgütern und deren Handhabung zu ermitteln. Dies stellt sicher, dass alle relevanten Sicherheits- und Handhabungsrichtlinien berücksichtigt werden, was besonders in der Lagerautomatisierung von großer Bedeutung ist.

In einer weiteren Ausführungsform ist das System ausgebildet, auf Basis der Softwarearchitektur und der generierten Software virtuelle Testläufe in einer simulierten Lagerumgebung durchzuführen. Das System ist weiterhin insbesondere ausgebildet, bei erfolgreichem Abschluss dieser virtuellen Testläufe automatisch reale Testläufe an einem physischen Gerät, insbesondere einem Gabelstapler, vorzubereiten und durchzuführen.

Diese virtuelle Testumgebung ermöglicht es, die Funktionalität und Leistung der entwickelten Software unter realitätsnahen Bedingungen zu überprüfen, ohne dass physische Geräte sofort benötigt werden. Durch die Simulation können potenzielle Fehler und Schwachstellen frühzeitig erkannt und behoben werden, was die Qualität und Zuverlässigkeit der Software erhöht. Der Testlauf kann die Erstellung eines digitalen Zwillings eines realen Geräts oder Systems umfassen, der anschließend zum Test der entwickelten Software verwendet wird. Zum Beispiel kann die entwickelte Software in dem digitalen Zwilling implementiert werden, d.h. der virtuelle Zwilling dient als virtuelles System, in dem die entwickelte Software installiert wird. Ein Vorteil dieser virtuellen Testläufe ist die Kosteneffizienz, da sie keine physischen Ressourcen erfordern und somit die Entwicklungs- und Testkosten reduzieren. Nach erfolgreichem Abschluss der virtuellen Testläufe ist das Testmodul zudem konfiguriert, automatisch reale Testläufe an einem physischen Gerät, beispielsweise einem Gabelstapler, vorzubereiten und durchzuführen. Diese Funktion stellt sicher, dass die Software nicht nur in einer simulierten Umgebung, sondern auch in der realen Welt einwandfrei funktioniert. Die Vorbereitung und Durchführung der realen Testläufe erfolgt automatisiert, was den Prozess beschleunigt und menschliche Fehler minimiert.

Das Testmodul führt einen virtuellen Test der im Planungs- und Konfigurationsmodul generierten Lösung durch. Es bildet Lagerprozesse, Materialflüsse und Transportwege ab, inklusive der Handhabung unterschiedlichster Lastträger und von Gefahrgut. Prüfpunkte wie Durchsatz, Taktzeiten, Kollisionserkennung und Sicherheitsvorschriften werden automatisiert ausgewertet, um mögliche Engpässe oder Unstimmigkeiten frühzeitig aufzudecken. Auf Grundlage positiver Simulationsergebnisse überträgt ein Testmodul die validierten Steuerungsparameter automatisch auf physische Geräte (z. B. fahrerlose Transportsysteme, Robotergreifer). Ein Testlauf in einer realen oder teilrealen Umgebung erfolgt vollautomatisch, wobei Sensorfeedback und Ablaufprotokolle ausgewertet werden, um Abweichungen zwischen Simulation und Praxis zu identifizieren.

Das System umfasst insbesondere ein Feedbackmodul. Das Feedbackmodul sammelt die realen Betriebs- und Testdaten und gleicht sie mit den Simulationsergebnissen ab. Das System ist hierzu über eine Datenverbindung mit dem realen System verbunden. Bei Abweichungen werden die zugehörigen Module oder Parameter automatisch angepasst, um den laufenden Betrieb zu optimieren. Dieser kontinuierliche Regelkreis ermöglicht es, z.B. Änderungen im Lageralltag, wie neue Artikel oder geänderte Umschlagszeiten, rasch zu erfassen und in die Konfiguration zurückzuspielen, ohne den gesamten Prozess erneut von Grund auf einzuleiten.

In einer weiteren Ausführungsform ist bzw. sind insbesondere die Kontextinformation und/oder die Technologie-Stacks und/oder die Software Requirements Specification (SRS) in Untermodule zerlegt. Diese Untermodule sind insbesondere in einer modularen Architektur organisiert, sodass einzelne Untermodule unabhängig voneinander hinzugefügt, entfernt oder ersetzt werden können.

Die Untermodule können unabhängig voneinander hinzugefügt, entfernt oder ersetzt werden, was eine dynamische Anpassung und Erweiterung des Systems erlaubt. Ein Vorteil dieser modularen Architektur liegt in der erhöhten Anpassungsfähigkeit und Skalierbarkeit des Systems. Durch die Zerlegung der Kontextinformation, des Technologie-Stacks und der SRS in kleinere, eigenständige Einheiten wird die Wartung und Aktualisierung des Systems vereinfacht. Einzelne Module können gezielt optimiert und/oder ausgetauscht werden, ohne dass das gesamte System beeinträchtigt wird. Dies führt zu einer verbesserten Effizienz bei der Softwareentwicklung, da Änderungen schneller und gezielter implementiert werden können.

In einer weiteren Ausführungsform ist insbesondere eine Versionsverwaltung vorgesehen, die es ermöglicht, frühere Versionen eines Untermoduls zurückzusetzen oder wiederherzustellen.

Eine Versionsverwaltung ist ein Mechanismus, der die Speicherung, Verwaltung und Nachverfolgung von Änderungen an Softwarekomponenten oder Untermodulen ermöglicht. Durch die Implementierung einer solchen Funktionalität wird es möglich, Änderungen an einzelnen Komponenten zu überwachen und bei Bedarf auf frühere Versionen zurückzugreifen. Dies ist besonders nützlich in der Softwareentwicklung, wo Änderungen oft iterativ und experimentell sind. Die Möglichkeit, frühere Versionen wiederherzustellen, bietet ein Sicherheitsnetz, das es Entwicklern erlaubt, Fehler zu korrigieren oder alternative Entwicklungswege zu erkunden, ohne den gesamten Entwicklungsprozess zu beeinträchtigen. Ein weiterer Vorteil der Versionsverwaltung ist die Unterstützung bei der Zusammenarbeit mehrerer Entwickler. In einem System, das auf automatisierte und maßgeschneiderte Softwareentwicklung abzielt, kann es vorkommen, dass mehrere Entwickler gleichzeitig an verschiedenen Teilen der Software arbeiten. Die Versionsverwaltung ermöglicht es, Änderungen zu synchronisieren und Konflikte zu vermeiden, indem sie eine klare Historie der Änderungen bereitstellt. Darüber hinaus trägt die Versionsverwaltung zur Qualitätssicherung bei, indem sie eine Möglichkeit bietet, Änderungen zu dokumentieren und zu überprüfen. Dies ist besonders wichtig in einem automatisierten System, in dem viele Prozesse ohne direkte menschliche Kontrolle ablaufen. Die Fähigkeit, frühere Versionen eines Untermoduls zurückzusetzen oder wiederherzustellen, kann auch die Effizienz des Testmoduls erhöhen. Wenn ein Testlauf Fehler im aktuellen Quellcode aufdeckt, kann die Versionsverwaltung genutzt werden, um zu einer fehlerfreien Version zurückzukehren und den Fehler zu analysieren.

In einer weiteren bevorzugten Ausführungsform ist das NLP-Modul insbesondere zur Verwendung eines Large Language Model (LLM) ausgebildet, das auf Software-Dokumentationen, Designmustern und Code-Repositories trainiert wurde.

Durch die Verwendung eines LLM, das auf umfangreichen und spezifischen Datenquellen trainiert wurde, wird die Genauigkeit und Effizienz der Interpretation der Anforderungsinformation verbessert. Ein Vorteil dieser Ausführungsform liegt in der Fähigkeit des LLM, komplexe und spezifische Anforderungen präzise zu erfassen und zu verarbeiten, was zu einer optimierten Konfiguration des Technologie-Stacks führt. Darüber hinaus ermöglicht das Wissensdatenbankmodul, das auf eine Wissensdatenbank zugreift und mit dem Interpretationsmodul gekoppelt ist, eine effizientere Erstellung und Bereitstellung von Vorlagen aus der Wissensdatenbank. Diese Vorlagen basieren auf der von dem Interpretationsmodul bestimmten Kontextinformation und/oder Technologie-Stack und/oder SRS. Die Verwendung eines LLM verbessert die Qualität der Vorlagen, da es in der Lage ist, aus einer Vielzahl von Code-Snippets, Designmustern, Projektstrukturen und Sicherheitsprüfungen die am besten geeigneten auszuwählen.

In einer weiteren Ausführungsform ist das Code-Generierungsmodul insbesondere in ein versionsverwaltetes Repository integriert.

Versionsverwaltete Repositories sind zentrale Speicherorte, in denen Codeänderungen verfolgt und dokumentiert werden, wodurch eine Historie aller Änderungen entsteht. Dies bietet mehrere Vorteile, darunter die Möglichkeit, Änderungen rückgängig zu machen, verschiedene Entwicklungszweige zu verwalten und die Zusammenarbeit zwischen mehreren Entwicklern zu erleichtern. Die Integration des Code-Generierungsmoduls in ein solches Repository stellt sicher, dass der generierte Code sofort versioniert wird, was eine höhere Transparenz und Nachvollziehbarkeit der Codeentwicklung ermöglicht. Dies ist besonders wichtig in komplexen Softwareprojekten, bei denen viele Änderungen und Anpassungen vorgenommen werden müssen. Darüber hinaus erleichtert die Versionskontrolle die Identifizierung und Behebung von Fehlern, da sie eine klare Übersicht über die Änderungen bietet, die zu einem bestimmten Zeitpunkt vorgenommen wurden. Die Integration in ein versionsverwaltetes Repository unterstützt auch die kontinuierliche Integration und Bereitstellung (CI/CD), indem sie automatisierte Tests und Deployments ermöglicht, sobald neuer Code generiert und in das Repository eingecheckt wird. Dies führt zu einer schnelleren und zuverlässigeren Softwareentwicklung, da potenzielle Probleme frühzeitig erkannt und behoben werden können. Ein weiterer Vorteil ist die verbesserte Zusammenarbeit und Kommunikation zwischen den Teammitgliedern, da alle Änderungen zentral dokumentiert und für alle Beteiligten zugänglich sind.

Das System verfügt über eine integrierte Versionskontroll- und Konfigurationsmanagement-Funktion, mittels derer sämtliche Planungsstände, Softwarebausteine und Modulkonfigurationen in einem Repository verwaltet werden. Dadurch sind parallele Entwicklungsszenarien oder Rollbacks auf frühere Stände einfach umsetzbar. So können unterschiedliche Varianten, beispielsweise für verschiedene Lastträgertypen oder Gefahrgutvorschriften, verwaltet und verglichen werden, bevor eine endgültige Entscheidung getroffen wird.

In einer weiteren Ausführungsform speichert die Wissensdatenbank insbesondere branchenspezifische Compliance-Richtlinien, sodass automatische Prüfungen und Codegenerierungen unter Einhaltung von PCI-DSS- und/oder HIPAA- und/oder GDPR-Richtlinien erfolgen können.

Die Integration dieser Compliance-Richtlinien in die Wissensdatenbank stellt sicher, dass die entwickelte Software nicht nur funktional und maßgeschneidert ist, sondern auch den rechtlichen und sicherheitstechnischen Anforderungen der jeweiligen Branche entspricht. Der Vorteil dieser Ausführungsform liegt in der Reduzierung des Risikos von Verstößen gegen branchenspezifische Vorschriften, was für Unternehmen von entscheidender Bedeutung ist, die in stark regulierten Sektoren tätig sind.

Die Wissensdatenbank fungiert als zentraler Speicherort für Informationen, die für die Einhaltung von Vorschriften erforderlich sind, und ermöglicht eine effiziente und konsistente Anwendung dieser Informationen während des gesamten Entwicklungsprozesses.

In einer weiteren Ausführungsform ist das System insbesondere als Cloud-Dienst (SaaS) oder als lokal installierte Lösung ausgebildet.

Das System und/oder die einzelnen Module können wahlweise lokal installiert oder in einer Cloud-basierten Umgebung (SaaS) betrieben werden. Eine containerisierte Infrastruktur (z. B. via Kubernetes) stellt sicher, dass alle Module (Planung, Simulation, Test, Feedback) skalierbar orchestriert und mit einer zentralen Wissensdatenbank verbunden sind. Für den Datenaustausch zwischen Modulen und realen Geräten steht eine standardisierte Schnittstelle (z. B. REST-API, Messaging-System) zur Verfügung, sodass sämtliche Steuerungs- und Rückmeldedaten durchgängig übertragen werden können.

Durch die Bereitstellung als Cloud-Dienst können Benutzer von überall her auf das System zugreifen, was insbesondere für verteilte Teams und Unternehmen mit mehreren Standorten von Vorteil ist. Diese Ausführungsform ermöglicht eine zentrale Verwaltung und Aktualisierung der Software, wodurch die Wartung vereinfacht und die Betriebskosten gesenkt werden. Die Skalierbarkeit der Cloud-Infrastruktur erlaubt es, die Ressourcen dynamisch anzupassen, um den Anforderungen der Benutzer gerecht zu werden, was eine effiziente Nutzung der Hardware und eine Reduzierung der Ausfallzeiten ermöglicht. Zudem bietet die Cloud-Umgebung eine hohe Verfügbarkeit und Sicherheit durch fortschrittliche Sicherheitsmechanismen und regelmäßige Backups, die in die Infrastruktur integriert sind. Auf der anderen Seite bietet die lokal installierte Lösung eine höhere Kontrolle über die Daten und die Infrastruktur, was besonders für Unternehmen wichtig ist, die strenge Datenschutz- und Sicherheitsanforderungen einhalten müssen. In jedem Fall ist das System über eine geeignete Datenverbindung mit dem realen System gekoppelt.

### USE CASE

Ein praxisnaher Anwendungsfall des erfindungsgemäßen Verfahrens betrifft die automatisierte und maßgeschneiderte Softwareentwicklung zur Planung und Umsetzung eines Lagerautomatisierungssystems in einem Logistikbetrieb.

Eine Bedienperson, beispielsweise ein technischer Planer eines Lagerhauses, gibt über die Benutzerschnittstelle der erfindungsgemäßen Entwicklungsumgebung eine Anforderungsinformation in natürlicher Sprache ein. Diese umfasst sowohl funktionale als auch nicht-funktionale Anforderungen an die zu entwickelnde Steuerungs- und Planungslösung. Die Eingabe könnte beispielsweise lauten:
"Das Lager soll 500 Auftragspositionen pro Stunde bearbeiten können. Verfügbar sind 1200 m² Fläche mit einer maximalen Höhe von 12 m. Eingelagert werden Kartons auf Kunststoffpaletten. Einige Produkte sind als Gefahrgut klassifiziert."

Die Natural-Language-Processing-Engine (NLPE) analysiert die Eingabe und zerlegt diese in interpretierbare Einzeldaten. So werden beispielsweise extrahiert: Umschlagleistung = 500 Positionen/h, Palettentyp = Kunststoffpalette (inkl. Format, Gewicht), Gefahrgut = vorhanden (System generiert Rückfrage zur Klassifizierung, z. B. nach ADR-Klassen), Lagerfläche = 1200 m², Höhe = 12 m.

Die NLPE identifiziert auf Basis dieser Daten die Kontextinformation, dass es sich um die Entwicklung einer Lagerverwaltungs- und Förderlogistiklösung mit Gefahrgutanforderungen handelt.

In einer bevorzugten Ausführungsform ist die Natural-Language-Processing-Engine (NLPE) so ausgestaltet, dass sie auf Grundlage der analysierten Eingabetexte die für die Softwareentwicklung relevanten Kontextinformationen extrahiert, insbesondere im Hinblick auf Anforderungen im Bereich der Lagerverwaltungs- und Förderlogistik mit Gefahrgutbezug. Hierzu verwendet die NLPE beispielsweise eine Kombination aus semantischer und syntaktischer Analyse unter Einbeziehung domänenspezifischen Wissens. Die NLPE greift dabei auf ein mit Gefahrgutrelevanten Dokumentationen (z. B. ADR, GHS) trainiertes Modell sowie auf eine kontrollierte Vokabelliste (ontologische Datenbank) zu, die einschlägige Begriffe, Synonyme und Klassifizierungen enthält. Die Kontextanalyse erfolgt beispielsweise auf Satz- und Dokumentenebene, wobei thematisch verwandte Begriffe durch semantisches Mapping in den Gefahrgutkontext eingeordnet werden. Zusätzlich kommen beispielsweise regelbasierte Validierungsmechanismen zur Anwendung, durch die bestimmte Eingaben, beispielsweise Hinweise auf brennbare Stoffe, automatisiert überprüft und gegebenenfalls Rückfragen generiert werden, um die Vollständigkeit und Konsistenz der Kontextinformation sicherzustellen. Die NLPE ist ferner in der Lage, anhand definierter Konfidenzschwellen die Notwendigkeit weiterer Eingaben zu erkennen und nachträgliches Feedback zur Verbesserung ihrer Modelle zu berücksichtigen.

Automatisiert wird ein passender Technologie-Stack zusammengestellt, etwa: Programmiersprache: Python; Framework: ROS (Robot Operating System); Datenbank: PostgreSQL mit GIS-Erweiterung; Erstellung der SRS und Softwarearchitektur.

In einer bevorzugten Ausführungsform wird ein für das jeweilige Softwareprojekt geeigneter Technologie-Stack automatisiert zusammengestellt. Hierzu analysiert beispielsweise eine Natural-Language-Processing-Engine (NLPE) die Anforderungsinformationen in sprachlicher Form und greift zur Konfiguration auf eine hinterlegte Wissensbasis zu. Der Technologie-Stack kann dabei Komponenten wie eine Programmiersprache, ein Software-Framework und ein Datenbanksystem umfassen.

Die Auswahl erfolgt beispielsweise unter Berücksichtigung von benutzerdefinierten Vorgaben sowie automatisiert ermittelten Empfehlungen. So können vom Nutzer vorab beispielsweise einmalig oder projektspezifisch Präferenzen festgelegt werden, beispielsweise hinsichtlich einer bevorzugten Programmiersprache (z. B. Python) oder eines Datenbanksystems (z. B. PostgreSQL). Diese Vorgaben fließen in die Entscheidungslogik ein und werden bei nachfolgenden Anforderungen automatisch berücksichtigt.

Ergänzend kann die NLPE auf Basis der analysierten Inhalte spezifische Technologien vorschlagen. Wird im Anforderungstext beispielsweise etwa eine Robotikfunktionalität erkannt, beispielsweise die Steuerung von Greifern oder Positionsregelung, empfiehlt das System beispielsweise das Robot Operating System (ROS) als Framework. Werden beispielsweise Geodatenverarbeitung oder Flottensteuerung angesprochen, kann das Datenbanksystem PostgreSQL mit Geoinformationssystem-Erweiterung (GIS-Erweiterung) vorgeschlagen werden. Für Anforderungen mit hohem Datenvolumen oder verteilter Systemarchitektur kann die NLPE auch NoSQL-Datenbanken wie MongoDB oder Apache Cassandra vorschlagen.

Fehlen Benutzervorgaben, erfolgt die Konfiguration beispielsweise vollständig automatisiert, basierend auf in der Wissensbasis hinterlegten Kriterien wie Leistungsanforderungen, Sicherheitsvorgaben oder Systemkompatibilität. Das System erlaubt beispielsweise eine iterative Anpassung des Technologie-Stacks während des Projektverlaufs, wobei einzelne Komponenten (z. B. das Datenbanksystem) ausgetauscht werden können, ohne dass eine vollständige Neuerstellung des Quellcodes erforderlich ist. Widersprüchliche Angaben werden beispielsweise durch automatische Rückfragen oder alternative Empfehlungen behandelt.

Basierend auf der Kontextinformation erzeugt das System eine Software Requirements Specification (SRS), welche unter anderem die folgenden Komponenten enthält: Frontend zur Visualisierung der Lagerbelegung in Echtzeit; Backend zur Steuerung von Robotereinheiten und Fördertechnik; Datenbankschema zur Verwaltung der Artikel, Gefahrenklassen und Stellplätze; APIs zur Anbindung von Sensorik und Steuergeräten; Konfigurationsdateien für Sicherheitszonen und Transportregeln.

Das System erzeugt automatisch aus einer durch eine Natural Language Processing Engine (NLPE) analysierten Kontextinformation eine strukturierte Softwareanforderungsspezifikation, Software Requirements Specification (SRS), und leitet daraus eine formale Softwarearchitektur ab. Dies erfolgt durch eine Kombination aus regelbasierter Logik, Ontologien, maschinellem Lernen und domänenspezifischen Vorlagen.

Vordefinierte Regeln und Ontologien ermöglichen das automatische Erkennen relevanter Anforderungen, beispielsweise im Bereich Gefahrgut oder Robotik, und führen zur Auswahl entsprechender Architekturbausteine. Ein trainiertes Sprachmodell, ein sogenanntes Large Language Model (LLM), wandelt die extrahierten Anforderungen in technische Spezifikationen um und ergänzt diese durch passende Entwurfsmuster, beispielsweise Microservices-Architekturen oder Kommunikationsschnittstellen.

Die generierte Software Requirements Specification (SRS) wird beispielsweise durch Sicherheits- und Konsistenzprüfungen validiert und bei Bedarf durch Module zur Einhaltung von Standards, beispielsweise Payment Card Industry-Data Security Standard (PCI-DSS) oder Health Insurance Portability and Accountability Act (HIPAA), ergänzt. Aus der Software Requirements Specification (SRS) werden beispielsweise automatisch strukturierte Architekturmodelle erzeugt, beispielsweise in YAML, Unified Modeling Language (UML) oder JavaScript Object Notation (JSON), die direkt durch Orchestrierungsplattformen, beispielsweise Kubernetes, nutzbar sind. Diese SRS wird zusammen mit Code-Vorlagen und Designmustern aus einer Wissensdatenbank in eine formale Softwarearchitektur überführt. Diese umfasst beispielsweise: Architekturstil: Microservices mit Event-Bus; Schichtenmodell mit Trennung von Steuerung, Simulation und Visualisierung; Kommunikationsprotokolle: MQTT für Echtzeitdaten; Sicherheitsmechanismen: Authentifizierung, Logging, Failover; Orchestrierungsstrategie via Docker-Container und Kubernetes.

Beispielsweise wird die so entwickelte Software zunächst in einer virtuellen Lagerumgebung getestet. Dabei wird beispielsweise simuliert, wie Gabelstapler Gefahrgut korrekt einlagern und dabei Sicherheitsabstände einhalten. Fördergeschwindigkeiten werden virtuell überprüft und Routen geplant. Es kann sich um einen digitalen Zwilling der tatsächlichen Lagerumgebung handeln, der auf Basis der Lagerspezifikationen erstellt wurde.

Nach einem erfolgreichen Simulationsdurchlauf erfolgt erfindungsgemäß ein automatisierter Realtest, etwa an einem realen Gabelstapler oder einer Förderstrecke, wobei die zuvor generierten Steuerungsdaten direkt übertragen werden. Sensorische Rückmeldungen (z. B. Kollisionserkennung, Greiferdruck) werden automatisch erfasst und analysiert. Die entwickelte Software wird dabei mittels des Deployment-Orchestrierungsmoduls in dem System für den Realtest bereitgestellt.

Im Verlauf der Tests kann sich beispielsweise zeigen, dass ein alternativer Greifer für Kunststoffpaletten effizienter wäre. Erfindungsgemäß wird beispielsweise lediglich das betreffende Untermodulelement (Greifmechanik) aktualisiert. Die geänderten Eigenschaften werden gespeichert, eine vollständige Neuerstellung der Anforderungsinformation ist nicht erforderlich. Das System erzeugt automatisch eine neue Simulation unter Berücksichtigung des neuen Greifers.

Die fertige Softwarelösung wird automatisiert bereitgestellt und ist exakt auf die anfangs eingegebene Anforderungsinformation angepasst. Der gesamte Prozess von der Texteingabe über die Architekturplanung bis zum getesteten Realbetrieb erfolgt weitgehend automatisiert und modular.

Bevorzugte Ausführungsbeispiele werden beispielhaft anhand der beiliegenden Figuren erläutert:
Fig. 1 stellt schematisch das erfindungsgemäße System dar.
Fig. 2 stellt schematisch das erfindungsgemäße Verfahren zur Erstellung von Software dar.

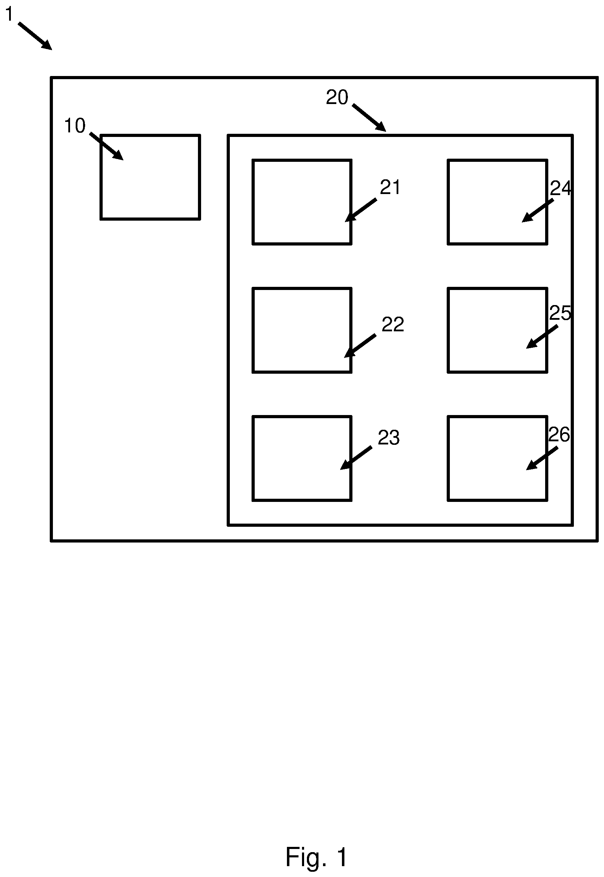

Figur 1 zeigt schematisch den Aufbau eines bevorzugten Ausführungsbeispiels eines Systems 1 zur automatisierten und maßgeschneiderten Softwareentwicklung auf Basis einer Anforderungsinformation. Das System 1 umfasst eine Benutzerschnittstelle 10, die dazu konfiguriert ist, eine Anforderungsinformation an die zu entwickelnde Software in natürlicher Sprache durch eine Bedienperson entgegenzunehmen.

Das System 1 umfasst ferner eine Erstellungseinheit 20, welche mehrere Module beinhaltet. Innerhalb der Erstellungseinheit 20 ist ein Interpretationsmodul 21 vorgesehen, das ausgebildet ist, die Anforderungsinformation unter Einsatz einer Natural-Language-Processing-Engine (NLPE) zu interpretieren. Das Interpretationsmodul 21 ist ferner dazu ausgebildet, eine Kontextinformation zu bestimmen, die eine mit der zu entwickelnden Software verbundene Entwicklungsaufgabe beschreibt, sowie einen Technologie-Stack zu konfigurieren. Der Technologie-Stack umfasst dabei mindestens eine Programmiersprache, ein Framework und eine Datenbank. Weiterhin erstellt das Interpretationsmodul 21 eine Software Requirements Specification (SRS), welche insbesondere Frontend-Komponenten, Backend-Komponenten, Datenbankschemata, Application Programming Interfaces (APIs) und Konfigurationsdateien umfasst.

Ebenfalls Teil der Erstellungseinheit 20 ist ein Wissensdatenbankmodul 22, das ausgebildet ist, auf eine Wissensdatenbank zuzugreifen, welche strukturierte Informationen wie Code-Snippets, Designmuster, Projektstrukturen und Sicherheitsprüfungen enthält. Das Wissensdatenbankmodul 22 ist mit dem Interpretationsmodul 21 gekoppelt und dazu konfiguriert, auf Basis der durch das Interpretationsmodul 21 bestimmten Kontextinformation und/oder des Technologie-Stacks und/oder der Software Requirements Specification eine oder mehrere Vorlagen aus der Wissensdatenbank bereitzustellen.

Die Erstellungseinheit 20 umfasst weiterhin eine Softwarearchitekturerstellungseinheit 23, welche ausgebildet ist, die Anforderungsinformation, den Technologie-Stack sowie die Software Requirements Specification unter Nutzung der durch das Wissensdatenbankmodul 22 bereitgestellten Vorlage in eine formale Softwarearchitektur zu überführen. Die formale Softwarearchitektur umfasst unter anderem einen Architekturstil, ein Schichtenmodell, Kommunikationsprotokolle, Sicherheitsmechanismen sowie eine Deployment- und Orchestrierungsstrategie.

Zur Generierung des tatsächlichen Quellcodes enthält die Erstellungseinheit 20 ein Codegenerierungsmodul 24, das dazu ausgebildet ist, auf Basis der formalen Softwarearchitektur Quellcode für die zu entwickelnde Software zu erzeugen.

Ein weiteres Modul innerhalb der Erstellungseinheit 20 ist das Testmodul 25. Es ist dafür vorgesehen, automatisierte Testläufe des generierten Quellcodes durchzuführen sowie eine KI-gestützte Fehlerbehebung vorzunehmen, um fehlerfreie Software bereitzustellen.

Schließlich ist in der Erstellungseinheit 20 ein Deployment-Orchestrierungsmodul 26 vorgesehen, welches ausgebildet ist, die entwickelte Software automatisiert bereitzustellen und bereitgestellte Komponenten entsprechend der Anforderungsinformation anzupassen, sodass die resultierende Softwarelösung maßgeschneidert an die ursprüngliche Anforderungsinformation angepasst ist.

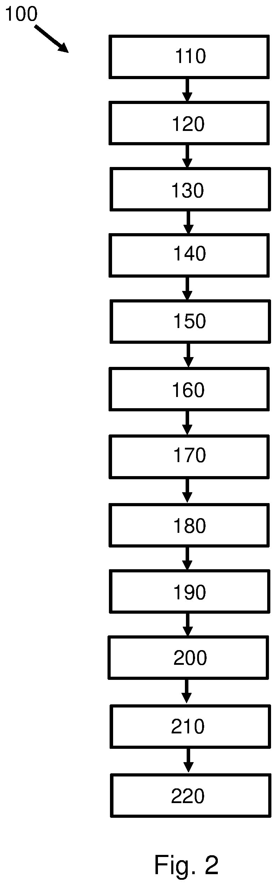

Figur 2 zeigt schematisch den Ablauf eines bevorzugten Ausführungsbeispiels eines Verfahrens zur automatisierten Softwareentwicklung 100 auf Basis einer Anforderungsinformation. Das Verfahren 100 beginnt mit dem Konfigurieren einer Benutzerschnittstelle 110 einer Entwicklungsumgebung, wobei die Benutzerschnittstelle eine Eingabe und Verarbeitung einer Anforderungsinformation ermöglicht. Anschließend erfolgt die Eingabe der Anforderungsinformation 120 an die zu entwickelnde Software durch eine Bedienperson in natürlicher Sprache über die Benutzerschnittstelle, wobei die Anforderungsinformation sowohl funktionale als auch nicht-funktionale Anforderungen umfasst.

Die eingegebene Anforderungsinformation wird sodann durch eine Natural-Language-Processing-Engine interpretiert 130, wobei die Anforderungsinformation in computerlesbare Daten umgewandelt, in einzelne Anforderungen zerlegt und abgelegt wird. In einem nächsten Schritt wird die abgelegte interpretierte Anforderungsinformation abgerufen 140, um auf deren Basis eine Kontextinformation zu bestimmen, welche eine mit der zu entwickelnden Software verbundene Entwicklungsaufgabe beschreibt.

Basierend auf der ermittelten Kontextinformation erfolgt eine Konfiguration eines Technologie-Stacks 150, wobei der Technologie-Stack insbesondere eine Programmiersprache, ein Framework sowie eine Datenbank umfasst. Anschließend wird unter Berücksichtigung der Kontextinformation und des konfigurierten Technologie-Stacks eine Software Requirements Specification (SRS) erstellt 160. Die Software Requirements Specification umfasst unter anderem Frontend-Komponenten, Backend-Komponenten, Datenbankschemata, Application Programming Interfaces (APIs) sowie Konfigurationsdateien. Auf Grundlage der SRS wird unter Zugriff auf eine Wissensdatenbank, welche Daten wie Code-Snippets, Designmuster, Projektstrukturen und Sicherheitsprüfungen enthält, eine Vorlage erstellt 170, wobei die Vorlage einen in Teilen vorgenerierten Quellcode umfasst.

Daraufhin erfolgt ein Überführen 180 der Anforderungsinformation, des Technologie-Stacks und der Software Requirements Specification in eine formale Softwarearchitektur. Die formale Softwarearchitektur umfasst insbesondere einen Architekturstil, ein Schichtenmodell, Kommunikationsprotokolle, Sicherheitsmechanismen sowie eine Deployment- und Orchestrierungsstrategie. Basierend auf der formalen Softwarearchitektur und der Vorlage wird ein Quellcode für die zu entwickelnde Software generiert 190. Nach der Quellcodegenerierung werden automatisierte Testläufe durchgeführt 200, gefolgt von einer KI-gestützten Fehlerbehebung 210, sodass der Quellcode bereinigt und funktionsfähig ist. Abschließend erfolgt eine Deployment-Orchestrierung 220 der entwickelten Software, wobei die Software maßgeschneidert an die Anforderungsinformation adaptiert ist.

### Bezugszeichenliste

- 1: System
- 10: Benutzerschnittstelle
- 20: Erstellungseinheit
- 21: Interpretationsmodul
- 22: Wissensdatenbankmodul
- 23: Softwarearchitekturerstellungseinheit
- 24: Codegenerierungsmodul
- 25: Testmodul
- 26: Deployment-Orchestrierungsmodul
- 100: Verfahren zur automatisierten Softwareentwicklung
- 110: Konfigurieren einer Benutzerschnittstelle
- 120: Eingabe der Anforderungsinformation
- 130: Interpretieren der Anforderungsinformation
- 140: Abrufen der abgelegten interpretierten Anforderungsinformation
- 150: Konfigurieren eines Technologie-Stacks
- 160: Erstellen einer Software Requirements Specification (SRS)
- 170: Erstellen einer Vorlage
- 180: Überführen in eine formale Softwarearchitektur
- 190: Generieren eines Quellcodes
- 200: Durchführen von automatisierten Testläufen
- 210: Durchführen einer KI-gestützten Fehlerbehebung
- 220: Deployment-Orchestrierung

## Patentansprüche

1. Verfahren zur automatisierten Softwareentwicklung auf Basis einer Anforderungsinformation, umfassend die Schritte:
- Konfigurieren einer Benutzerschnittstelle einer Entwicklungsumgebung zum Entwickeln einer Software,
o wobei die Benutzerschnittstelle eine Eingabe und Verarbeitung einer Anforderungsinformation ermöglicht;
- Eingabe der Anforderungsinformation an die zu entwickelnde Software in natürlicher Sprache durch eine Bedienperson an die Benutzerschnittstelle,
o wobei die Anforderungsinformation funktionale sowie nicht-funktionale Anforderungen an die zu entwickelnde Software umfasst;
- Interpretieren der Anforderungsinformation durch eine Natural-Language-Processing-Engine (NLPE), so dass die Anforderungsinformation in computerlesbare Daten umgewandelt und in einzelne Anforderungen zerlegt und abgelegt wird,
- Abrufen der abgelegten interpretierten Anforderungsinformation und Bestimmen, auf Basis der interpretierten Anforderungsinformation, einer Kontextinformation, die eine mit der zu entwickelnden Software verbundene Entwicklungsaufgabe beschreibt;
- Konfigurieren eines Technologie-Stacks basierend auf der Kontextinformation, wobei der Technologie-Stack umfasst:
o eine Programmiersprache,
o ein Framework,
o eine Datenbank;
- Erstellen, auf Basis der Kontextinformation und des Technologie-Stacks, einer Software Requirements Specification (SRS), wobei die Software Requirements Specification (SRS) umfasst:
o Frontend-Komponenten,
o Backend-Komponenten,
o Datenbankschemata,
o Application Programming Interfaces (APIs),
o Konfigurationsdateien;
- Erstellen, auf Basis der Software Requirements Specification (SRS), einer Vorlage aus Daten aus einer Wissensdatenbank, wobei die Wissensdatenbank die Daten umfasst:
o Code-Snippets,
o Designmuster,
o Projektstrukturen,
o Sicherheitsprüfungen,
- wobei die Vorlage ein in Teilen vorgenerierter Quellcode ist;
- Überführen der Anforderungsinformation, des Technologie-Stacks und der Software Requirements Specification (SRS) auf Basis der Vorlage in eine formale Softwarearchitektur, wobei die Softwarearchitektur umfasst:
o Architekturstil,
o Schichtenmodell,
o Kommunikationsprotokolle,
o Sicherheitsmechanismen,
o Deployment- und Orchestrierungsstrategie;
- Generieren eines Quellcodes für die zu entwickelnde Software basierend auf der formalen Softwarearchitektur und der Vorlage,
- Durchführen von automatisierten Testläufen des Quellcodes,
- Durchführen einer KI-gestützten Fehlerbehebung des Quellcodes, sodass der Quellcode von Fehlern bereinigt wird und fehlerfrei abläuft,
- Deployment-Orchestrierung der entwickelten Software, sodass die Software maßgeschneidert an die Anforderungsinformation adaptiert ist.

2. Verfahren nach Anspruch 1,
- wobei die Anforderungsinformation eine oder mehrere Angaben zu bewegenden Lastträgertypen und/oder zu transportierenden Gefahrgütern und/oder zu einzusetzenden Sensor- und Maschinentechnologien enthält, und
- wobei die Natural-Language-Processing-Engine (NLPE) Rückfragen an die Bedienperson generiert, um normgerechte Detailangaben zu Gefahrgutklassen, Transportbedingungen und Kompatibilitätsvorgaben für Lastträgertypen zu ermitteln.

3. Verfahren nach einem der Ansprüche 1-2,
- wobei auf Basis der interpretierten Anforderungsinformation und der erzeugten Software Requirements Specification (SRS) ein virtueller Testlauf der zu entwickelnden Software in einer simulierten Lagerumgebung durchgeführt wird, und
- wobei nach Abschluss eines erfolgreichen virtuellen Testlaufs ein Testlauf an einem realen Gerät automatisiert vorbereitet und ausgeführt wird.

4. Verfahren nach einem der Ansprüche 1-3, weiterhin umfassend die Schritte:
- Iteratives Funktionszerlegen der Kontextinformation und/oder des Technologie-Stacks und/oder der Software Requirements Specification (SRS) in Untermodule,
- wobei die Untermodule nachträglich modifizierbar sind, sodass Änderungen an einzelnen Untermoduleigenschaften vorgenommen werden können, ohne dass eine vollständige Neuerstellung der Anforderungsinformation erforderlich ist.

5. Verfahren nach einem der Ansprüche 1-4, weiterhin umfassend die Schritte:
- Empfangen einer Änderung an mindestens einer Eigenschaft eines Untermoduls,
- Speichern der geänderten Untermoduleigenschaften,
- Bereitstellen des geänderten Untermoduls für eine weitere Nutzung.

6. Verfahren nach einem der Ansprüche 1-5, weiterhin umfassend die Schritte:
- Definieren von Tests,
- Auswerten von erstellten Fehlerprotokollen,
- Korrigieren des Quellcodes, bis alle definierten Tests erfolgreich durchlaufen sind.

7. Verfahren nach einem der Ansprüche 1-6, wobei der Schritt des Interpretierens durch ein NLP-Modul und/oder ein Large Language Model (LLM) erfolgt, das auf Software-Dokumentationen, Designmustern und Code-Repositories trainiert wurde.

8. Verfahren nach einem der Ansprüche 1-7, wobei das Generieren von Quellcode unter Berücksichtigung sicherheitskritischer Best Practices- und Compliance-Anforderungen erfolgt, insbesondere unter Einhaltung von PCI-DSS-, und/oder HIPAA- und/oder GDPR-Richtlinien.

9. Verfahren nach einem der Ansprüche 1-8, weiterhin umfassend die Schritte:
- Erfassung von Benutzerfeedback, insbesondere in einer Staging-Umgebung,
- Verwendung einer KI-Interpretationsschicht, um das Benutzerfeedback in zusätzliche Anforderungen für eine iterative Codeverbesserung umzuwandeln.

10. Verfahren nach einem der Ansprüche 1-9, wobei der Schritt der Deployment-Orchestrierung auf einer containerisierten Infrastruktur erfolgt.

11. System zur automatisierten und maßgeschneiderten Softwareentwicklung auf Basis einer Anforderungsinformation, umfassend:
- eine Benutzerschnittstelle, konfiguriert zur Entgegennahme der Anforderungsinformation an die zu entwickelnde Software in natürlicher Sprache durch eine Bedienperson,
- eine Erstellungseinheit, umfassend:
- ein Interpretationsmodul, das ausgebildet ist, die Anforderungsinformation durch eine Natural-Language-Processing-Engine (NLPE) zu interpretieren, und
o eine Kontextinformation aus der Anforderungsinformation zu bestimmen, die eine mit der zu entwickelnden Software verbundene Entwicklungsaufgabe beschreibt,
o einen Technologie-Stack basierend auf der Anforderungsinformation zu konfigurieren, wobei der Technologie-Stack umfasst:
o eine Programmiersprache,
o ein Framework,
o eine Datenbank;
- eine Software Requirements Specification (SRS) zu erstellen, wobei die Software Requirements Specification (SRS) umfasst:
o Frontend-Komponenten,
o Backend-Komponenten,
o Datenbankschemata,
o Application Programming Interfaces (APIs),
o Konfigurationsdateien;
- ein Wissensdatenbankmodul, das ausgebildet ist auf eine Wissensdatenbank zuzugreifen, wobei die Wissensdatenbank die Daten umfasst
o Code-Snippets,
o Designmuster,
o Projektstrukturen,
o Sicherheitsprüfungen,
- wobei das Wissensdatenbankmodul und mit dem Interpretationsmodul gekoppelt ist und konfiguriert ist,
o auf Basis der von dem Interpretationsmodul bestimmten Kontextinformation und/oder des Technologie-Stack und/oder der Software Requirements Specification (SRS) eine oder mehrere Vorlagen aus der Wissensdatenbank zu erstellen und bereitzustellen;
- eine Softwarearchitekturerstellungseinheit, die ausgebildet ist, die Anforderungsinformation, den Technologie-Stack und die Software Requirements Specification (SRS) auf Basis der Vorlage in eine formale Softwarearchitektur zu überführen, wobei die Softwarearchitektur umfasst:
o Architekturstil,
o Schichtenmodell,
o Kommunikationsprotokolle,
o Sicherheitsmechanismen,
o Deployment- und Orchestrierungsstrategie;
- ein Codegenerierungsmodul, das dazu ausgebildet ist, Quellcode für die zu entwickelnde Software basierend auf der Softwarearchitektur zu generieren,
- ein Testmodul, das dazu ausgebildet ist, Testläufe des Quellcodes durchzuführen und KI-gestützte Fehlerbehebung des Quellcodes durchzuführen,
- ein Deployment-Orchestrierungsmodul, das dazu ausgebildet ist, die entwickelte Software bereitzustellen, sodass die Software maßgeschneidert an die Anforderungsinformation adaptiert ist.

12. System nach Anspruch 11, wobei das System ausgebildet ist, Anforderungsinformationen zu einer Lagerautomatisierung entgegenzunehmen,
- wobei die Anforderungsinformation Angaben zu Lastträgertypen und/oder Gefahrgutarten und/oder einzusetzenden Sensor- und Maschinenkomponenten umfasst, und
- wobei das Interpretationsmodul ferner ausgebildet ist, Rückfragen an die Bedienperson zu generieren, um normbasierte Detailangaben zu transportierten Gefahrgütern und deren Handhabung zu ermitteln.

13. System nach einem der Ansprüche 11-12, wobei das Testmodul ausgebildet ist, auf Basis der Softwarearchitektur und der generierten Software virtuelle Testläufe in einer simulierten Lagerumgebung durchzuführen, und
- wobei bei erfolgreichem Abschluss dieser virtuellen Testläufe automatisch reale Testläufe an einem physischen Gerät, insbesondere einem Gabelstapler, vorbereitet und durchgeführt werden.

14. System nach einem der Ansprüche 11-13, wobei die Kontextinformation und/oder die Technologie-Stacks und/oder die Software Requirements Specification (SRS) in Untermodule zerlegt sind und die Untermodule in einer modularen Architektur organisiert sind, sodass einzelne Untermodule unabhängig voneinander hinzugefügt, entfernt oder ersetzt werden können.

15. System nach einem der Ansprüche 11-14, wobei eine Versionsverwaltung vorgesehen ist, die es ermöglicht, frühere Versionen eines Untermoduls zurückzusetzen oder wiederherzustellen.
